(19) Europäisches Patentamt
European Patent Office
Office européen des brevets

(11) **EP 4 715 898 A1**

(12) **EUROPEAN PATENT APPLICATION**

(43) Date of publication:
**25.03.2026 Bulletin 2026/13**

(21) Application number: **25190593.1**

(22) Date of filing: **21.07.2025**

(51) International Patent Classification (IPC):
*H01M 4/36* (2006.01)     *H01M 4/485* (2010.01)
*H01M 4/62* (2006.01)     *H01M 4/66* (2006.01)

(52) Cooperative Patent Classification (CPC):
**H01M 4/364; H01M 4/485; H01M 4/621;**
**H01M 4/663;** H01M 4/0471

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.09.2024 JP 2024162123**

(71) Applicant: **Kabushiki Kaisha Toshiba**
**Tokyo 105-0023 (JP)**

(72) Inventors:
• **MURATA, Yoshiaki**
**Minato-ku, Tokyo 105-0023 (JP)**

• TAKAHASHI, Keitaro
**Minato-ku, Tokyo 105-0023 (JP)**
• KANO, Kento
**Minato-ku, Tokyo 105-0023 (JP)**
• HOSHINA, Keigo
**Minato-ku, Tokyo 105-0023 (JP)**
• HARADA, Yasuhiro
**Minato-ku, Tokyo 105-0023 (JP)**
• TAKAMI, Norio
**Minato-ku, Tokyo 105-0023 (JP)**

(74) Representative: **Hoffmann Eitle**
**Patent- und Rechtsanwälte PartmbB**
**Arabellastraße 30**
**81925 München (DE)**

(54) **ELECTRODE, SECONDARY BATTERY, BATTERY PACK, AND VEHICLE**

(57) In general, according to an approach, an electrode is provided. The electrode contains a niobium-containing oxide and a carbon-containing material. A hydroxyl group content of the niobium-containing oxide is 0.25 mmol/g or less. A functional group content of the carbon-containing material is 5 mmol/g or less.

F I G. 1

EP 4 715 898 A1

## Description

FIELD

The present disclosure relates to an electrode, a secondary battery, a battery pack, and a vehicle.

BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric automobiles, an uninterruptible power supply for base stations for portable telephones, or the like. Therefore, the secondary battery is demanded to, in addition to having a high energy density, be excellent in other performances such as rapid charge/discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge and discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, an electrode potential of an oxide of titanium is about 1.5 V (vs. Li/Li$^+$) with respect to metallic lithium electrode, which is higher (more noble) compared to potentials of a carbon-based negative electrodes. The potential of an oxide of titanium is electrochemically restricted due to being caused by oxidation-reduction reactions between Ti$^{3+}$ and Ti$^{4+}$ upon insertion and extraction of lithium. In addition, there is also a fact that rapid charge and discharge of lithium ions can be stably performed at a high electrode potential of about 1.5 V (vs. Li/Li$^+$). Therefore, it has been conventionally difficult to reduce the electrode potential in order to improve the energy density.

On the other hand, considering the capacity per unit weight, the theoretical capacity of titanium dioxide (anatase structure) is about 165 mAh/g, and the theoretical capacity of spinel lithium-titanium composite oxides such as Li$_4$Ti$_5$O$_{12}$ is about 180 mAh/g. On another hand, the theoretical capacity of a general graphite based electrode material is 385 mAh/g and greater. As such, the capacity density of an oxide of titanium is significantly lower than that of the carbon based negative electrode material. This is due to there being few lithium-insertion sites in the crystal structure, and lithium tending to be stabilized in the structure, and thus, substantial capacity being reduced.

In view of the above circumstances, a new electrode material containing Nb has been studied. Such a niobium-containing oxide material is expected to have a high charge/discharge capacity. For example, a composite oxide represented by TiNb$_2$O$_7$ has a high theoretical capacity exceeding 380 mAh/g. Therefore, the niobium-containing oxide is expected as a high-capacity material in place of Li$_4$Ti$_5$O$_{12}$.

BRIEF DESCRIPTION OF DRAWINGS

FIG. 1 is a cross-sectional view schematically showing an example of a secondary battery according to an approach.
FIG. 2 is an enlarged cross-sectional view of section A of the secondary battery shown in FIG. 1.
FIG. 3 is a partially cut-out perspective view schematically showing another example of the secondary battery according to an approach.
FIG. 4 is an enlarged cross-sectional view of section B of the secondary battery shown in FIG. 3.
FIG. 5 is a perspective view schematically showing an example of a battery module according to an approach.
FIG. 6 is an exploded perspective view schematically showing an example of a battery pack according to an approach.
FIG. 7 is a block diagram showing an example of an electric circuit of the battery pack shown in FIG. 6.
FIG. 8 is a partially see-through diagram schematically showing an example of a vehicle according to an approach.

FIG. 9 is a diagram schematically showing an example of a control system related to an electric system in the vehicle according to an approach.

DETAILED DESCRIPTION

In general, according to an approach, an electrode is provided. The electrode contains a niobium-containing oxide and a carbon-containing material. A hydroxyl group content of the niobium-containing oxide is 0.25 mmol/g or less. A functional group content of the carbon-containing material is 5 mmol/g or less.

According to another approach, a secondary battery including a positive electrode, a negative electrode, and an electrolyte is provided. The negative electrode includes the electrode according to the above approach.

According to another approach, a battery pack is provided. The battery pack includes the secondary battery according to the above approach.

According to another approach, a vehicle is provided. The vehicle includes the battery pack according to the above approach.

(First approach)

According to a first approach, an electrode is provided. The electrode contains a niobium-containing oxide and a carbon-containing material. The hydroxyl group content of the niobium-containing oxide is 0.25 mmol/g or less. The functional group content of the carbon-containing material is 5 mmol/g or less.

As a result of intensive studies, the present inventors have found a tendency that gas generation in the electrode can be reduced as the hydroxyl group content of the niobium-containing oxide is lower. Since the niobium-containing oxide contained in the electrode according to the approach has a low hydroxyl group content of 0.25 mmol/g or less, the amount of gas generated can be reduced. In addition, a niobium-containing oxide having a low content of the hydroxyl group (hydroxy group) has high hydrophobicity.

A carbon-containing material having a functional group content of 5 mmol/g or less has high hydrophobicity. Therefore, it hardly repels the niobium-containing oxide having a hydroxyl group content of 0.25 mmol/g or less, which similarly has high hydrophobicity. Therefore, the carbon-containing material and the niobium-containing oxide are likely to aggregate. Therefore, an electro-conductive path in the electrode can be favorably maintained. In addition, peeling between the carbon-containing material and the niobium-containing oxide can be made less likely to occur. As a result, output performance can be enhanced.

The electrode according to the approach will be further described.

In the present specification, a composition, a structure, a chemical formula, and the like may be described for the niobium-containing oxide and the carbon-containing material, but in each description, a hydroxyl group that can be contained in the niobium-containing oxide and an element contained in a functional group that can be contained in the carbon-containing material are not described unless otherwise specified. That is, the niobium-containing oxide may be obtained by further adding a hydroxyl group to the composition shown in the present specification. The carbon-containing material may be obtained by further adding a functional group to the composition shown in the present specification.

The niobium-containing oxide can be contained, for example, in a particle shape in the electrode. The particles may be primary particles or secondary particles in which primary particles are aggregated.

The niobium-containing oxide may include a crystalline phase and an amorphous phase (defect). However, since a hydroxyl group is easily added to the amorphous phase, it is preferable that the niobium-containing oxide be formed only of the crystal phase or include a small amount of the amorphous phase. In other words, the niobium-containing oxide preferably has high crystallinity. The niobium-containing oxide having low crystallinity may have, for example, an element ratio different from a composition of atoms (ratio among elements) constituting the crystal of the niobium-containing oxide in the amorphous phase. When the particle containing the niobium-containing oxide has an amorphous phase, the amorphous phase may be contained in the surface of the particle.

The hydroxyl group content of the niobium-containing oxide may be, for example, 0.00 mmol/g or more and 0.25 mmol/g or less. The hydroxyl group content of the niobium-containing oxide can be represented by the substance amount (mmol) of the hydroxyl group contained per mass (g) of the niobium-containing oxide.

The carbon-containing material contains carbon atoms. The carbon-containing material preferably has a composition formed of carbon atoms. The carbon-containing material may contain a functional group containing an atom or atoms other than the carbon atom, but as described above, the carbon-containing material preferably has a low functional group content, and more preferably does not contain a functional group. When the carbon-containing material does not contain a functional group, the carbon-containing material may be formed only of carbon atoms.

The carbon-containing material may include a crystalline phase and an amorphous phase (defect). However, since a functional group is easily added to the amorphous phase, it is preferable that the carbon-containing material be formed only of the crystal phase or include a small amount of the amorphous phase. In other words, the carbon-containing

EP 4 715 898 A1

material preferably has high crystallinity.

The functional group content of the carbon-containing material may be, for example, 0 mmol/g or more and 5 mmol/g or less. The functional group content of the carbon-containing material can be represented by the substance amount (mmol) of the functional group contained per mass (g) of the carbon-containing material. Examples of the functional group that can be contained in the carbon-containing material include a hydroxyl group, a carboxy group, a carbonyl group, an ether bond, and a hydrocarbon bond. These functional groups have high hydrophilicity. As the content of such a functional group increases, the hydrophobicity of the carbon-containing material tends to decrease.

The carbon-containing material may include, for example, at least one selected from the group consisting of a fibrous carbon-containing material, a granular carbon-containing material, and a flat plate-shaped carbon-containing material. The type of the carbon-containing material can be one species or two or more species.

The carbon-containing material preferably includes a fibrous carbon-containing material. The fibrous carbon-containing material is a carbon-containing material having a shape having a one-dimensionally high aspect ratio. Among the carbon-containing materials, those having an aspect ratio (ratio of fiber length to fiber diameter) of 5 or more can be regarded as fibrous carbon-containing materials.

Examples of the fibrous carbon-containing material include carbon nanotubes (CNTs). Specific examples of the CNTs include few-walled carbon nanotubes (FWCNTs) such as multi-walled carbon nanotube (MWCNT), single-walled carbon nanotube (SWCNT), vapor grown carbon fiber (VGCF), and carbon nanofiber(CNF). The type of the fibrous carbon-containing material can be one species or two or more species.

The average fiber diameter of the fibrous carbon-containing material is preferably as small as 10 nm or less. A fibrous carbon-containing material having a small average fiber diameter tends to have high crystallinity. The higher the crystallinity of the carbon-containing material is, the more the hydrophobicity is improved. Therefore, a fibrous carbon-containing material having a small average fiber diameter tends to aggregate with a hydrophobic niobium-containing oxide to maintain a good electro-conductive path, which is preferable. This also contributes to reducing side reactions of the electrode.

Examples of the fibrous carbon-containing material having an average fiber diameter of 10 nm or less include FWCNT and SWCNT. From the viewpoint of further reducing the average fiber diameter, carbon nanotubes having a tubular structure with a small wall surface thickness are preferable, and SWCNTs are most preferable.

The granular carbon-containing material may have a particle shape with a low aspect ratio. The particle shape may be irregular. The granular carbon-containing material may contain particles having a low aspect ratio in a state in which each of the particles exists alone or in a state in which two or more particles are connected. A carbon-containing material having a particle shape with an aspect ratio of 3 or less can be regarded as a granular carbon-containing material. More specifically, when there is no combination of lengths having an aspect ratio exceeding 3 among three lengths obtained by measuring lengths of a particle in three directions, i.e., a thickness direction, a longitudinal direction orthogonal to the thickness direction, and a lateral direction orthogonal to the thickness direction and the longitudinal direction, it can be said that "the aspect ratio is 3 or less".

Specific examples of the granular carbon-containing material include carbon black such as acetylene black and furnace black. From the viewpoint of reducing the functional group content of the carbon-containing material, crystalline carbon blacks are preferred among the carbon blacks. Examples of the crystalline carbon blacks include acetylene black. Specific examples of the acetylene black include DENKA BLACK (registered trademark) manufactured by Denka Company Limited.

The flat plate-shaped carbon-containing material may have a two-dimensional structure. When the lengths of carbon-containing materials in the three directions, i.e., the thickness direction, the longitudinal direction orthogonal to the thickness direction, and the lateral direction orthogonal to the thickness direction and the longitudinal direction, are measured, a carbon-containing material having a ratio of the length in the longitudinal direction to the length in the thickness direction of 5 or more and a ratio of the length in the lateral direction to the length in the thickness direction of 5 or more can be regarded as a flat plate-shaped carbon-containing material. That is, the flat plate-shaped carbon-containing material may have a plane having an aspect ratio of $5 \times 5$ or more with respect to the thickness direction. A portion of the plane having the maximum width is defined as maximum width.

Examples of the flat plate-shaped carbon-containing material include multilayered graphene and graphite. Among them, the multilayered graphene has high crystallinity, and thus can have a reduced functional group content, which is preferable.

When the carbon-containing material includes the fibrous carbon-containing material and the granular carbon-containing material, the average fiber diameter of the fibrous carbon-containing material and the average particle size of the granular carbon-containing material preferably satisfy the following formula A.

$$\text{Formula A: } db < 10 \, da$$

In the formula A, da is the average fiber diameter of the fibrous carbon-containing material, and db is the average particle size of the granular carbon-containing material.

When the carbon-containing material includes the fibrous carbon-containing material and the flat plate-shaped carbon-containing material, the average fiber diameter of the fibrous carbon-containing material and the average thickness of the flat plate-shaped carbon-containing material preferably satisfy the following formula B.

$$\text{Formula B: } ta < 20\ da$$

In the formula B, da is the average fiber diameter of the fibrous carbon-containing material, and ta is the average thickness of the flat plate-shaped carbon-containing material.

The fibrous carbon-containing material and the granular carbon-containing material that satisfy the formula A are less likely to aggregate with each other. In addition, the fibrous carbon-containing material and the flat plate-shaped carbon-containing material that satisfy the formula B are less likely to aggregate with each other.

When the granular carbon-containing material and/or the flat plate-shaped carbon-containing material and the fibrous carbon-containing material aggregate, the fibrous carbon-containing material may coat the granular carbon-containing material and/or the flat plate-shaped carbon-containing material. In this case, since the fibrous carbon-containing material is less likely to be dispersed in the electrode, it is difficult to secure an electro-conductive path of the electrode by the fibrous carbon-containing material, and the output may be reduced. Thus, this is not preferable.

The electrode according to the approach will be described in more detail.

In the electrode according to the approach, the niobium-containing oxide can be contained as an active material. The carbon-containing material may be contained as an electro-conductive agent.

The electrode may be a battery electrode containing a niobium-containing oxide as a battery active material. The electrode is preferably an electrode for a secondary battery. Since the niobium-containing oxide and the carbon-containing material are hardly peeled off in the electrode, a good electro-conductive path is easily maintained in the electrode even after a charge and discharge cycle. The electrode as the battery electrode may be, for example, a negative electrode containing the niobium-containing oxide as a negative electrode active material.

The electrode may include a current collector and an active material-containing layer. The active material-containing layer may be formed on both of obverse and reverse surfaces or one surface of the current collector. The active material-containing layer may contain the active material, and an electro-conductive agent and a binder.

The active material-containing layer may contain the niobium-containing oxide alone, or may contain a mixture of the niobium-containing oxide and one species or two or more species of other active materials.

Specific compositions of the niobium-containing oxide will be exemplified below, but the hydroxyl group that can be contained in the niobium-containing oxide is not considered in each composition formula.

Examples of the niobium-containing oxide include a monoclinic niobium titanium oxide, niobium pentoxide ($Nb_2O_5$), and a compound represented by $Nb_{1-x}W_xO_{2.5+0.5x}$ (x is, for example, $0 < x \leq 0.5$). The type of the niobium-containing oxide can be one species or two or more species.

Examples of the monoclinic niobium titanium oxide include a compound represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. The respective subscripts in the composition formula are specified as follows: $0 \leq x \leq 5$, $0 \leq y < 1$, $0 \leq z < 2$, and $-0.3 \leq \delta \leq 0.3$. Specific examples of the monoclinic niobium titanium oxide include $Li_xNb_2TiO_7$ ($0 \leq x \leq 5$).

Another example of the monoclinic niobium titanium oxide is a compound represented by $Li_xTi_{1-y}M3_{y+z}Nb_{2-z}O_{7-\delta}$. Here, M3 is at least one selected from the group consisting of Mg, Fe, Ni, Co, W, Ta, and Mo. The respective subscripts in the composition formula are specified as follows: $0 \leq x \leq 5$, $0 \leq y < 1$, $0 \leq z < 2$, and $-0.3 \leq \delta \leq 0.3$.

Specific examples of the compound represented by $Nb_{1-x}W_xO_{2.5+3x}$ include $Nb_{12}WO_{33}$ and $Nb_{16}W_5O_{55}$. These compositions are represented by $Nb_{1-x}W_xO_{2.5+3x}$, and satisfy $0 < x \leq 0.5$. In other words, each of the formulae $Nb_{12}WO_{33}$ and $Nb_{16}W_5O_{55}$ is a formula indicating a composition formula satisfying $Nb_{1-x}W_xO_{2.5+3x}$ such that each subscript is an integer.

In the case where the niobium-containing oxide is contained as the negative electrode active material, examples of such other active materials include lithium titanate having a ramsdellite structure (e.g., $Li_{2+y}Ti_3O_7$, $0 \leq y \leq 3$), lithium titanate having a spinel structure (e.g., $Li_{4+x}Ti_5O_{12}$, $0 \leq x \leq 3$), titanium dioxide ($TiO_2$), anatase titanium dioxide, rutile titanium dioxide, hollandite titanium composite oxide, and orthorhombic titanium composite oxides.

Examples of the orthorhombic titanium-containing composite oxide include a compound represented by $Li_{2+a}M^I_{2-b}Ti_{6-c}M^{II}_dO_{14+\sigma}$. Here, $M^I$ is at least one selected from the group consisting of Sr, Ba, Ca, Mg, Na, Cs, Rb and K. $M^{II}$ is at least one selected from the group consisting of Zr, Sn, V, Nb, Ta, Mo, W, Y, Fe, Co, Cr, Mn, Ni and Al. The respective subscripts in the composition formula are specified as follows: $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$).

The electro-conductive agent is added to improve current collection performance and to suppress the contact resistance between the active material and the current collector. Examples of the electro-conductive agent include the carbon-containing materials described above. In the case where the electrode according to the approach is used as the negative electrode, the carbon-containing material may be described as a negative electrode carbon-containing material. In addition to using the carbon-containing material described above as the electro-conductive agent, a carbon coating or an electro-conductive inorganic material coating may be applied to the surface of the active material particle.

The binder is added to fill gaps among the dispersed active material and also to bind the active material with the current collector. Examples of such another binder include polytetrafluoroethylene (PTFE), polyvinylidene fluoride (PVdF), fluorine rubber, styrene-butadiene rubber, polyacrylic acid compounds, imide compounds, carboxymethyl cellulose (CMC), and salts of CMC. One of these may be used as the binder, or alternatively, two or more may be used in combination as the binder.

Blending proportions of the active material, electro-conductive agent and binder in the active material-containing layer may be appropriately changed according to the use of the electrode. For example, in a case of using the electrode as a negative electrode of a secondary battery, the active material (negative electrode active material), electro-conductive agent and binder are preferably blended in proportions of 68% by mass or more and 96% by mass or less, 2% by mass or more and 30% by mass or less, and 2% by mass or more and 30% by mass or less, respectively. When the amount of the electro-conductive agent is 2% by mass or more, the current collection performance of the active material-containing layer can be improved. When the amount of the binder is 2% by mass or more, binding between the active material-containing layer and the current collector is sufficient, whereby excellent cycling performance can be expected. On the other hand, an amount of each of the electro-conductive agent and the binder is preferably 30% by mass or less, in view of increasing the capacity.

There may be used for the current collector, a material which is electrochemically stable at the potential at which lithium (Li) is inserted into and extracted from the active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably 5 $\mu$m or more and 20 $\mu$m or less. The current collector having such a thickness can maintain balance between the strength and weight reduction of the electrode.

The current collector may include a portion where the negative electrode active material-containing layer is not formed on a surface thereof. This portion may serve as a negative electrode current collecting tab.

(Manufacturing method)

A method for manufacturing an electrode according to an approach includes, for example, synthesizing a niobium-containing oxide, preparing a slurry containing the niobium-containing oxide and a carbon-containing material, and applying the slurry to a current collector.

Each step that can be included in the above method will be described below.

The hydroxyl group content of the niobium-containing oxide is affected by the synthesis conditions and the like. For example, the niobium-containing oxide can be roughly synthesized by mixing starting materials and heating the obtained mixture. In such synthesis, the method of mixing starting materials and the heating temperature may affect the hydroxyl group content of the niobium-containing oxide to be obtained. The niobium-containing oxide may contain, for example, an alkali residual component derived from a starting material as an impurity. Examples of the alkali include potassium. The hydroxyl group content of the niobium-containing oxide can also be increased by the alkali residual component.

In order to obtain a niobium-containing oxide having a low hydroxyl group content, for example, a niobium-containing oxide is preferably synthesized by performing an annealing treatment on an intermediate obtained by performing a liquid phase method.

The liquid phase method is a method of synthesizing a target substance using a mixture (mixed liquid) obtained by melting a starting material, or dissolving or suspending the starting material in a solvent, and then mixing the starting material so that it is homogeneous at an atomic level. A granular precursor may be produced from a mixed liquid, and a target substance may be synthesized from the precursor.

Examples of the liquid phase method include a spray drying method, a spray pyrolysis method, and a hydrothermal synthesis method. The spray drying method is a method of synthesizing a target substance by spraying a mixed liquid, drying the sprayed droplets in hot air to obtain an intermediate, and heating the intermediate. The spray pyrolysis method is a method in which droplets obtained by spraying a mixed liquid are introduced into a hightemperature field such as a reaction furnace by a carrier gas and heated, and a target substance is synthesized by a reaction with a gas, thermal decomposition, or the like. The hydrothermal synthesis method is a method of synthesizing a target substance in the presence of hightemperature and high-pressure hot water by heating and pressurizing a mixture containing water as a solvent.

As the starting material, an oxide or a salt containing niobium and a metal element (for example, titanium) other than niobium, which is contained in the target niobium-containing oxide, can be used. The salts used as the starting materials are preferably salts, such as a carbonate and a nitrate, which decompose at a relatively low temperature to form oxides. These starting materials can be mixed and used in a substance amount ratio (molar ratio) so as to attain a target composition. As the starting material, a material having a low alkali content is preferably used.

The intermediate may be obtained by a method other than the liquid phase method described above. Examples of methods other than the liquid phase method include a solid phase method. The solid phase method is a method of synthesizing a target substance by heating a mixture obtained by mixing starting materials such as a metal oxide in a solid phase.

From the viewpoint of obtaining a niobium-containing oxide having a low hydroxyl group content, the liquid phase method is preferable. The niobium-containing oxide obtained through the liquid phase method is preferable because a decrease in crystallinity and a change in surface element ratio hardly occur in the pulverization described later.

The intermediate obtained as described above may contain a niobium-containing oxide having low crystallinity. By performing an annealing treatment for heating such an intermediate, the crystallinity of the niobium-containing oxide can be improved, which is preferable.

In order to obtain a niobium-containing oxide having high crystallinity, the temperature of the annealing treatment (annealing temperature) is preferably increased. As the temperature in the annealing treatment is higher and the time of the annealing treatment is longer, the crystal phase of the niobium-containing oxide can be developed. However, when the temperature of the annealing treatment is too high or the time is too long, sintering proceeds, and the niobium-containing oxide may form coarse secondary particles. In order to obtain a niobium-containing oxide having a desired particle size, the secondary particles need to be pulverized by a ball mill or the like. However, when the shearing force during pulverization is too high, an amorphous phase may be formed at a surface of the niobium-containing oxide. As a result, the hydroxyl group content can eventually be increased.

From the viewpoint of synthesizing a niobium-containing oxide having high crystallinity, the annealing treatment is preferably performed within a range of 400°C or higher and 1100°C or lower for 1 hour or more and 12 hours or less. The temperature of the annealing treatment is more preferably 800°C or lower.

After the annealing treatment, the niobium-containing oxide can be made into particles having a desired particle size by performing pulverization. For the pulverization, for example, a ball mill can be used. Specific examples of the ball mill include a dry ball mill. Ball mill conditions can be, for example, a ball diameter of 1 mm or more and 10 mm or less, a rotation speed of 120 rpm or more and 450 rpm or less, and 3 hours or more and 24 hours or less. The shearing force at the time of pulverization tends to decrease as the ball diameter decreases, as the rotation speed decreases, or as the ball mill time is shortened. As the shearing force is smaller, the crystallinity of the niobium-containing oxide particles obtained by pulverization tends to be higher.

After the pulverization, a re-annealing treatment may be performed. The re-annealing treatment can be performed by heating the niobium-containing oxide particles obtained by pulverization at a temperature of 400°C or higher and 700°C or lower for 0.5 hours or more and 12 hours or less. The time for the re-annealing treatment is preferably 6 hours or less. In the niobium-containing oxide particle immediately after pulverization, the crystallinity of the particle surface may be reduced by pulverization, and the particle surface may include an amorphous phase. By subjecting such a niobium-containing oxide particle to the re-annealing treatment, the crystallinity of the particle surface can be improved, so that a hydroxyl group can be hardly added to the niobium-containing oxide. As a result, the hydroxyl group content of the niobium-containing oxide can be reduced. When the niobium-containing oxide particles obtained by pulverization have sufficiently high crystallinity, the re-annealing treatment may be omitted.

When the ball mill is performed at a rotation speed exceeding 450 rpm, amorphization of the niobium-containing oxide remarkably easily proceeds. As a result, the niobium-containing oxide particles obtained after pulverization may be in a state in which the element ratio at the particle surface varies. There is a limit to the hydroxyl group content that can be reduced even when the niobium-containing oxide that is remarkably amorphized as described above is subjected to the re-annealing treatment. Therefore, it becomes difficult to reduce the hydroxyl group content of the niobium-containing oxide to 0.25 mmol/g or less. Thus, this is not preferable.

The niobium-containing oxide synthesized as described above is dispersed in a solvent, together with the carbon-containing material. Specifically, an active material containing a niobium-containing oxide, a carbon-containing material, and a binder are dispersed in a solvent. As the solvent, for example, water can be used.

For the dispersion, for example, a bead mill can be used. If the shearing force by the bead mill is too high, the crystallinity of the carbon-containing material may decrease. In addition, a portion having crystallinity reduced at this time, in the carbon-containing material, may react with the solvent. As a result, a functional group is easily added to the carbon-containing material. Thus, this is not preferable. From the viewpoint of reducing the functional group content of the carbon-containing material, dispersion conditions by the bead mill are preferably a low peripheral speed and a high flow rate. In the dispersion by the bead mill, the peripheral speed can be, for example, 10 m/s or less. The peripheral speed is preferably, for example, 6 m/s. The peripheral speed is preferably, for example, 3000 rpm or less, and can be, for example, 2000 rpm. The flow rate can be 10 mL/min or more. The flow rate can be, for example, 40 mL/min. As described above, the slurry can be prepared.

Before the dispersion by the bead mill, the active material containing the niobium-containing oxide, the carbon-containing material, and the binder may be premixed. The premixing can be performed to obtain an electrode slurry in which materials are sufficiently dispersed in a solvent without excessively increasing the shearing force by the bead mill. For the premixing, for example, a planetary mixer can be used. If the shearing force by the planetary mixer is too high, the crystallinity of the carbon-containing material decreases and a functional group is likely to be added to the carbon-containing material. Thus, this is not preferable. From the viewpoint of lowering the functional group content of the carbon-containing material, the peripheral speed of the planetary mixer is preferably lowered. The peripheral speed can be, for example, 3 m/s or less.

The slurry is applied onto one surface or both of obverse and reverse surfaces of a current collector. Next, the applied slurry is dried so as to obtain a stack of active material-containing layer and current collector. Then, the stack is subjected to pressing. Thus, the electrode can be produced.

In addition to the method described above, the electrode may be produced by the following method. First, the niobium-containing oxide, the carbon-containing material, and the binder are mixed (kneaded) to obtain a mixture. At this time, a constrained fluidized mixer (Henschel mixer) or the like can be used for the kneading. If the shearing force by the Henschel mixer is too high at this time, the crystallinity of the carbon-containing material decreases and a functional group is likely to be added to the carbon-containing material. Thus, this is not preferable. When mixing is performed using the Henschel mixer, kneading environment can be adjusted together with the shearing force. From the viewpoint of reducing the functional group content of the carbon-containing material, a rotation speed of the Henschel mixer and kneading atmosphere are preferably adjusted as the kneading environment. The rotation speed can be, for example, 120 rpm or less. As the kneading environment, kneading is preferably performed in an atmosphere not containing oxygen. Specifically, an argon atmosphere or the like can be selected. Next, the mixture is formed into pellets. Then the electrode can be obtained by arranging the pellets onto the current collector.

(Measurement method)

Hereinafter, a method for measuring the hydroxyl group content of the niobium-containing oxide and the functional group content of the carbon-containing material will be described. In addition, methods of type discrimination and size measurement for carbon-containing materials will be described.

When the electrode to be measured is incorporated in a battery, before measurement, the battery is disassembled in a glove box controlled at a dew point of -80°C or lower, and the electrode to be measured (for example, negative electrode) is taken out.

(Preparation of measurement sample)

From the electrode to be measured, a sample for TG-MS to be used for the hydroxyl group content of the niobium-containing oxide and a sample for TPD-MS to be used for the measurement of the functional group content of the carbon-containing material are prepared by the following method.

First, a coin cell is assembled using the electrode to be measured and Li metal as a counter electrode. Li is completely extracted from the electrode to be measured by charging the coin cell to 3.2 V vs. Li at 1 mA/g. This operation is repeated three times.

The coin cell is disassembled in a glove box controlled at a dew point of -80°C or lower, and the electrode to be measured is taken out. The active material-containing layer of the electrode to be measured is peeled off from the current collector using a spatula to obtain a powdery active material-containing layer (electrode powder). The obtained electrode powder is put into water to perform ultrasonic dispersion. A precipitate precipitated after dispersion and an upper suspension are separated. This ultrasonic dispersion and separation operation is repeated three times to obtain a precipitate and a suspension. In the active material-containing layer, the niobium-containing oxide is likely to precipitate after ultrasonic dispersion. Therefore, the precipitate may contain the niobium-containing oxide. The suspension may contain the carbon-containing material.

(Measurement of hydroxyl group content of niobium-containing oxide)

A sample for thermogravimetry mass spectrometry (TG-MS) used for measuring the hydroxyl group content of the niobium-containing oxide can be obtained by drying the precipitate obtained by the above-described method at 130°C for 24 hours or more and then allowing the precipitate to stand in an environment of a dew point of 10°C or higher for 24 hours.

The hydroxyl group content of the niobium-containing oxide can be measured by subjecting the sample for TG-MS to TG-MS as follows.

Measurement is performed up to 600°C at a temperature rising rate of 3°C per minute under an inert environment, for example, under a nitrogen flow, using a thermogravimetric/mass spectrometer. At this time, the hydroxyl group is quantified by MS analysis at m/z = 18. The hydroxyl group is quantified with an integrated value in a range of 150°C or higher and 400°C or lower.

(Measurement of functional group content of carbon-containing material)

A sample for temperature programmed desorption-mass spectrometry (TPD-MS) used for measuring the functional group content of the carbon-containing material can be obtained by the following method. First, the suspension obtained by the above-described method is centrifuged. A precipitated phase precipitated by centrifugation is put into water again, allowed to stand for 10 minutes, and then the precipitate is removed. The resulting liquid is centrifuged again to precipitate a carbon-containing material-containing phase containing the carbon-containing material. Next, the obtained carbon-containing material-containing phase is washed. The washing is performed by putting the carbon-containing material-containing phase into water again, allowing it to stand for 10 minutes, then removing a precipitate, and performing centrifugation again to obtain a precipitated phase. The washing of the carbon-containing material-containing phase described above is repeated 3 times, followed by drying at 150°C for 24 hours or more in an inert atmosphere to obtain a sample for TPD-MS.

The functional group content of the carbon-containing material can be measured by subjecting the sample for TPD-MS to TPD-MS as follows.

Substance amounts of $CO$, $CO_2$, $H_2O$, and $H_2$ gases generated at 200°C or higher and 800°C or lower in an inert gas flow are quantified using a temperature programmed desorption-mass spectrometer. These gases may be gases generated when the carbon-containing material contains a hydroxyl group, a carboxy group, a carbonyl group, an ether bond, or a hydrocarbon bond.

The quantified substance amount of the gas is obtained as the amount of the functional group contained in the carbon-containing material. The temperature programmed desorption-mass spectrometry is preferably performed in a dehumidified environment in order to prevent re-adsorption of moisture.

(Type discrimination and size measurement for carbon-containing material)

The type of the carbon-containing material contained in the electrode can be determined by analysis with a scanning electron microscope (SEM). Among the particles, fibers, or flat plates observed in a secondary electron image of the electrode, those having the smallest size (particle size, fiber length or maximum width) are used as the carbon-containing material. Particles having the largest particle size are used as the active material particles.

Reflected electron image analysis is performed in a visual field including both the active material particles and carbon-containing material identified as described above. A visual field acquisition condition is set so as to realize lightness such that the active material particles and carbon-containing material identified by the above-described method can be discriminated based on their brightness. The condition is, for example, measurement at 1 kV-10 uA in a reflected electron image, but is not limited thereto depending on the type of the active material and the like.

For the fiber diameter of the fibrous carbon-containing material, a straight line is drawn along one side of the fiber, and a distance until the perpendicular line intersects the other side of the fiber is defined as the fiber diameter. The average fiber diameter can be measured by measuring fiber diameters of 10 fibrous carbon-containing materials randomly selected from the visual field and calculating an average value thereof. The fiber length of the fibrous carbon-containing material can be measured by extrapolating a curve along one side of the fiber in the visual field until the curve is interrupted, and measuring the length of the curve. The average fiber length can be measured by selecting 10 extrapolated curves in order from the longest one and calculating the average value of their lengths.

The thickness of the flat plate-shaped carbon-containing material is measured at a portion having the smallest thickness in the flat plate-shaped carbon-containing material. Specifically, when the thickness of the flat plate-shaped carbon-containing material is observed, a straight line perpendicular to the plane having an aspect ratio of $5 \times 5$ or more with respect to the thickness direction described above is drawn in the portion having the smallest thickness. A distance between two points at which the straight line intersects a contour line of the flat plate-shaped carbon-containing material is defined as the thickness of the flat plate-shaped carbon-containing material. The average thickness can be measured by measuring the thicknesses of 10 flat plate-shaped carbon-containing materials randomly selected from the visual field and calculating an average value thereof.

The particle size of the granular carbon-containing material is the diameter of the largest circle inscribed in the particle. The average particle size can be measured by measuring the diameters of 10 granular carbon-containing materials randomly selected in the visual field and calculating an average value thereof.

(Identification of crystalline carbon black)

It can be identified, by a transmission electron microscope (TEM), that the electrode contains crystalline carbon black. A sample for TEM is prepared from the electrode to be measured in the same manner as in the preparation of the TPD-MS sample. When the sample for TEM is analyzed by TEM, a carbon-containing material in which two or more layered structures are developed can be identified as crystalline carbon black.

The electrode according to the first approach contains a niobium-containing oxide and a carbon-containing material. The hydroxyl group content of the niobium-containing oxide is 0.25 mmol/g or less. The functional group content of the carbon-containing material is 5 mmol/g or less. Therefore, it is possible to provide an electrode in which gas generation is suppressed and output performance is high.

(Second approach)

According to a second approach, there is provided a secondary battery including a negative electrode, a positive electrode, and an electrolyte. As the negative electrode, the secondary battery includes the electrode according to the first approach.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

1) Negative electrode

The negative electrode may include a negative electrode current collector and a negative electrode active material-containing layer. The negative electrode current collector and the negative electrode active material-containing layer may respectively be the current collector and active material-containing layer that may be included in the electrode according to the first approach.

Of the details of the negative electrode, portions that overlap with the details described in the first approach are omitted.

The density of the negative electrode active material-containing layer (excluding the current collector) is preferably 1.8 g/cm³ or more and 3.5 g/cm³ or less. The negative electrode having the density of the negative electrode active material-containing layer within this range is excellent in energy density and ability of holding the electrolyte. The density of the negative electrode active material-containing layer is more preferably 2.1 g/cm³ or more and 3.0 g/cm³ or less.

The negative electrode may, for example, be produced by the same method as that for the electrode according to the first approach.

2) Positive electrode

The positive electrode may include a positive electrode current collector and a positive electrode active material-containing layer. The positive electrode active material-containing layer may be formed on one surface or both of obverse and reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1, 0 < y < 1$), lithium manganese cobalt composite oxides (e.g., $Li_xMn_yCo_{1-y}O_2$; $0 < x \leq 1, 0 < y < 1$), lithium manganese nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $Li_xFe_{1-y}Mn_yPO_4$; $0 < x \leq 1$, $0 < y \leq 1$, and $Li_xCoPO_4$; $0 < x \leq 1$), iron sulfate ($Fe_2(SO_4)_3$), vanadium oxides (e.g., $V_2O_5$), and lithium nickel cobalt manganese composite oxide ($Li_xNi_{1-y-z}Co_yMn_zO_2$; $0 < x < 1$, $0 < y < 1$, $0 < z < 1$, $y + z < 1$).

Among the above, examples of compounds more preferable as the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxide (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). The positive electrode potential can be made high by using these positive electrode active materials.

When an ambient temperature molten salt is used as the electrolyte of the battery, it is preferable to use a positive electrode active material including lithium iron phosphate, $Li_xVPO_4F$ ($0 \leq x \leq 1$), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle size of the positive electrode active material is preferably 100 nm or more and 1 μm or less. The positive electrode active material having a primary particle size of 100 nm or more is easy to handle during industrial production. In the positive electrode active material having a primary particle size of 1 μm or less, in-solid diffusion of lithium ions can proceed smoothly.

The specific surface area of the positive electrode active material is preferably 0.1 m²/g or more and 10 m²/g or less. With the positive electrode active material having a specific surface area of 0.1 m²/g or more, sufficient sites for inserting and extracting Li ions can be secured. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous materials such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass or more and 98% by mass or less, and 2% by mass or more and 20% by mass or less, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 0.2% by mass to 20% by mass, and 0.5% by mass to 15% by mass, respectively.

When the amount of the electro-conductive agent is 0.5% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably 5 μm or more and 20 μm or less, and more preferably 15 μm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be produced by the following method, for example. First, a slurry is prepared by suspending the positive electrode active material, electro-conductive agent, and binder in a solvent. The slurry is applied onto one surface or both of obverse and reverse surfaces of a positive electrode current collector. Next, the applied slurry is dried so as to obtain a stack of positive electrode active material-containing layer and positive electrode current collector. Then, the stack is subjected to pressing. The positive electrode is produced in this manner.

Alternatively, the positive electrode may also be produced by the following method. First, positive electrode active material, electro-conductive agent, and binder are mixed to obtain a mixture. Next, the mixture is formed into pellets. Then the positive electrode can be obtained by arranging the pellets onto the positive electrode current collector.

3) Electrolyte

As the electrolyte, for example, a nonaqueous electrolyte, an aqueous electrolyte, or a combination of a nonaqueous electrolyte and an aqueous electrolyte can be used.

As the nonaqueous electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably 0.5 mol/L or more and 2.5 mol/L or less.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), and lithium bistrifluoromethylsulfonylimide ($LiN(CF_3SO_2)_2$), and mixtures thereof. The electrolyte salt is preferably resistant to oxidation even at a high potential, and most preferably $LiPF_6$.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C or higher and 25°C or lower). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of $1 \times 10^{-6}$ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula $Li_{1+x}M\alpha_2(PO_4)_3$. $M\alpha$ in the above general formula is, for example, one or more selected from the group consisting of titanium (Ti), germanium (Ge), strontium (Sr), zirconium (Zr), tin (Sn), aluminum (Al), and calcium (Ca). The subscript x is within the range of $0 \leq x \leq 2$.

Specific examples of the lithium phosphate solid electrolyte having the NASICON structure include a LATP compound represented by $Li_{1+x}Al_xTi_{2-x}(PO_4)_3$ where $0.1 \leq x \leq 0.5$; a compound represented by $Li_{1+x}Al_yM\beta_{2-y}(PO_4)_3$ where $M\beta$ is one or more selected from the group consisting of Ti, Ge, Sr, Zr, Sn, and Ca, $0 \leq x \leq 1$, and $0 \leq y \leq 1$; a compound represented by $Li_{1+x}Al_xGe_{2-x}(PO_4)_3$ where $0 \leq x \leq 2$; a compound represented by $Li_{1+x}Al_xZr_{2-x}(PO_4)_3$ where $0 \leq x \leq 2$; a compound represented by $Li_{1+x+y}Al_xM\gamma_{2-x}Si_yP_{3-y}O_{12}$ where $M\gamma$ is one or more selected from the group consisting of Ti and Ge, $0 < x \leq 2$, and $0 \leq y < 3$; and a compound represented by $Li_{1+2x}Zr_{1-x}Ca_x(PO_4)_3$ where $0 \leq x < 1$.

In addition to the above lithium phosphate solid electrolyte, examples of the oxide solid electrolyte include amorphous LIPON compounds represented by $Li_xPO_yN_z$ where $2.6 \leq x \leq 3.5$, $1.9 \leq y \leq 3.8$, and $0.1 \leq z \leq 1.3$ (e.g., $Li_{2.9}PO_{3.3}N_{0.46}$); a compound having a garnet structure represented by $La_{5+x}A_xLa_{3-x}M\delta_2O_{12}$ where A is one or more selected from the group consisting of Ca, Sr, and Ba, $M\delta$ is one or more selected from the group consisting of Nb and Ta, and $0 \leq x \leq 0.5$; a compound represented by $Li_3M\delta_{2-x}L_2O_{12}$ where $M\delta$ is one or more selected from the group consisting of Nb and Ta, L may include Zr, and $0 \leq x \leq 0.5$; a compound represented by $Li_{7-3x}Al_xLa_3Zr_3O_{12}$ where $0 \leq x \leq 0.5$; an LLZ compound represented by $Li_{5+x}La_3Mo_{2-x}Zr_xO_{12}$ where $M\delta$ is one or more selected from the group consisting of Nb and Ta, and $0 \leq x \leq 2$ (e.g., $Li_7La_3Zr_2O_{12}$); and a compound having a perovskite structure and represented by $La_{2/3-x}Li_xTiO_3$ where $0.3 \leq x \leq 0.7$.

One or more among the above compounds may be used as the solid electrolyte. Two or more of the above solid electrolytes may be used, as well.

The aqueous electrolyte includes an aqueous solvent and an electrolyte salt. The aqueous electrolyte is, for example, a liquid. The liquid aqueous electrolyte is a solution prepared by dissolving an electrolyte salt in an aqueous solvent. The amount of the aqueous solvent in the solution is preferably 1 mol or more, and more preferably 3.5 mol or more, based on 1 mol of the salt as a solute.

As the aqueous solvent, a solution including water can be used. The solution including water may be pure water or a mixed solvent between water and an organic solvent. The aqueous solvent includes, for example, water in a proportion of 50% by volume or more.

It can be confirmed by gas chromatography-mass spectrometry (GC-MS) measurement that water is included in the aqueous electrolyte. In addition, the salt concentration and water content in the aqueous electrolyte can be measured, for example, by inductively coupled plasma (ICP) emission analysis. A molar concentration (mol/L) can be calculated by weighing a specified amount of the aqueous electrolyte and calculating the concentration of the salt included therein. Numbers of moles of the solute and the solvent can be calculated by measuring a specific gravity of the aqueous electrolyte.

The aqueous electrolyte may be a gel electrolyte. The gel electrolyte is prepared by obtaining a composite of the above-described liquid aqueous electrolyte and a polymeric material. As the polymeric material, the polymeric material described for the gel nonaqueous electrolyte can be used.

Examples of the electrolyte salt that can be included in the aqueous electrolyte include lithium chloride (LiCl), lithium bromide (LiBr), lithium hydroxide (LiOH), lithium sulfate ($Li_2SO_4$), lithium nitrate ($LiNO_3$), lithium acetate ($CH_3COO$-Li), lithium oxalate ($Li_2C_2O_4$), lithium carbonate ($Li_2CO_3$), and lithium bis(trifluoromethanesulfonyl)imide) (LiTFSI); $LiN(SO_2CF_3)_2$), lithium bis(fluorosulfonyl) imide (LiFSI; $LiN(SO_2F)_2$), and lithium bisoxalate borate (LiBOB: $LiB[(OCO)_2]_2$). The type of the electrolyte salt that is included in the aqueous electrolyte can be one species or two or more species. The aqueous electrolyte preferably includes LiCl. When LiCl is used, the lithium ion concentration of the aqueous electrolyte can be increased. The lithium salt preferably includes at least one of $LiSO_4$ and LiOH in addition to LiCl.

The molar concentration of lithium ions in the aqueous electrolyte may be 3 mol/L or more, 6 mol/L or more, or 12 mol/L or more. According to one example, the molar concentration of lithium ions in the aqueous electrolyte is 14 mol/L or less. When the concentration of lithium ions in the aqueous electrolyte is high, electrolysis of the aqueous solvent in the negative electrode is likely to be suppressed, and hydrogen tends to be less generated from the negative electrode.

The aqueous electrolyte preferably contains at least one selected from a chlorine ion ($Cl^-$), a hydroxide ion ($OH^-$), a sulfate ion ($SO_4^{2-}$), and a nitrate ion ($NO_3^-$) as an anion species.

The pH of the aqueous electrolyte is preferably 3 or more and 14 or less, and more preferably 4 or more and 13 or less. When separate electrolytes are used as the negative electrode side electrolyte and the positive electrode side electrolyte, the pH of the negative electrode side electrolyte is preferably in the range of 3 or more and 14 or less, and the pH of the positive electrode side electrolyte is preferably in the range of 1 or more and 8 or less.

When the pH of the negative electrode side electrolyte is within the above range, the hydrogen generation potential at the negative electrode decreases, so that hydrogen generation at the negative electrode is suppressed. This improves the storage performance and cycle life performance of the battery. When the pH of the positive electrode side electrolyte is within the above range, the oxygen generation potential at the positive electrode increases, so that the oxygen generation at the positive electrode decreases. This improves the storage performance and cycle life performance of the battery. The pH of the positive electrode side electrolyte is more preferably in the range of 3 or more and 7.5 or less.

The aqueous electrolyte may include a surfactant. Examples of the surfactant include nonionic surfactants such as polyoxyalkylene alkyl ether, polyethylene glycol, polyvinyl alcohol, thiourea, disodium 3,3'-dithiobis(1-propane sulfonic acid), dimercaptothiadiazole, boric acid, oxalic acid, malonic acid, saccharin, sodium naphthalene sulfonate, gelatin, potassium nitrate, aromatic aldehyde, and heterocyclic aldehyde. The surfactant may be used alone, or two or more species thereof may be used in combination.

4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

5) Container member

As the container member, for example, a container made of laminate film or a container made of metal may be used.

The thickness of the laminate film is, for example, 0.5 mm or less, and preferably 0.2 mm or less.

As the laminate film, used is a multilayer film including plural resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

6) Negative electrode terminal

The negative electrode terminal may be made of a material that is electrochemically stable at the Li insertion-extraction potential of the negative electrode active materials mentioned above, and having electrical conductivity. For example, the negative electrode terminal may be made of a material that is electrically stable in a potential range of 1 V or more and 3 V or less (vs. Li/Li$^+$) relative to an oxidation-reduction potential of lithium, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

7) Positive electrode terminal

The positive electrode terminal may be made of, for example, a material that is electrically stable in the potential range of 3 V to 4.5 V (vs. Li/Li$^+$) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

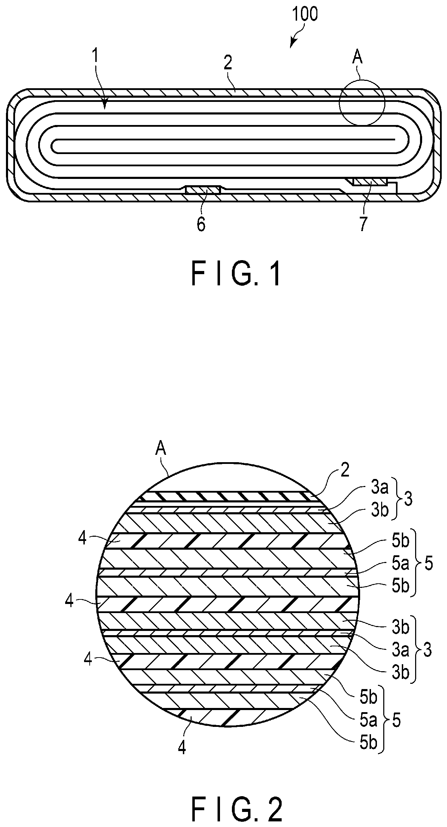

FIG. 1 is a cross-sectional view schematically showing an example of the secondary battery. FIG. 2 is an enlarged cross-sectional view of section A of the secondary battery shown in FIG. 1.

The secondary battery 100 shown in FIGS. 1 and 2 includes a bag-shaped container member 2 shown in FIG. 1, an electrode group 1 shown in FIGS. 1 and 2, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 1, the electrode group 1 is a wound electrode group in a flat form. The wound electrode group 1 in a flat form includes a negative electrode 3, a separator 4, and a positive electrode 5, as shown in FIG. 2. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 2. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 1, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

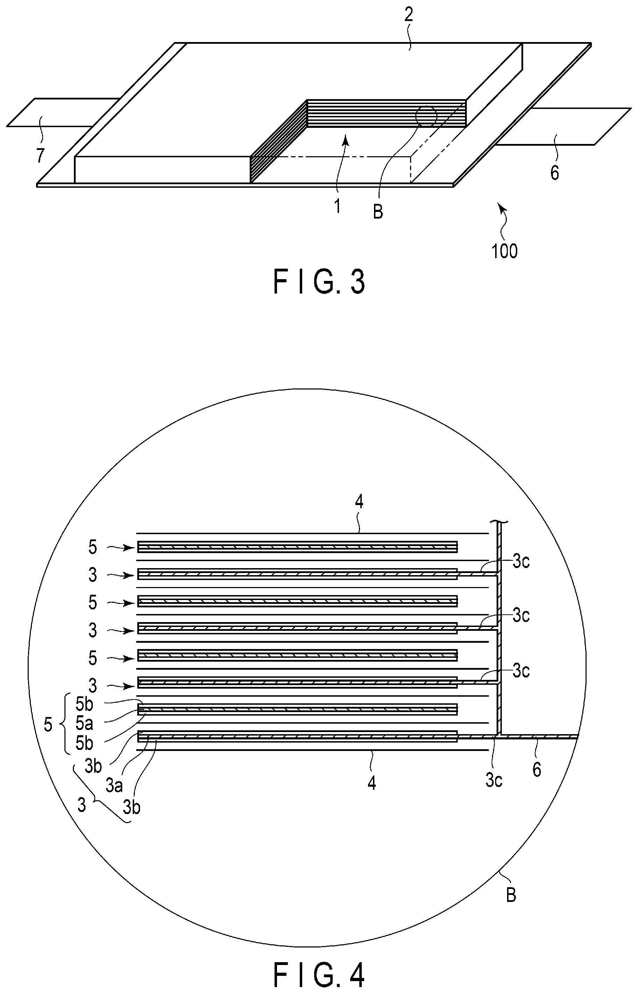

The secondary battery according to the approach is not limited to the secondary battery of the structure shown in FIGS. 1 and 2, and may be, for example, a battery of a structure as shown in FIGS. 3 and 4.

FIG. 3 is a partially cut-out perspective view schematically showing another example of the secondary battery. FIG. 4 is an enlarged cross-sectional view of section B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 4, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 4, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the second approach includes the electrode according to the first approach. Therefore, it is possible to provide a secondary battery in which gas generation is suppressed and output performance is high.


(Third approach)

According to a third approach, a battery module is provided. The battery module includes plural of secondary batteries according to the second approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

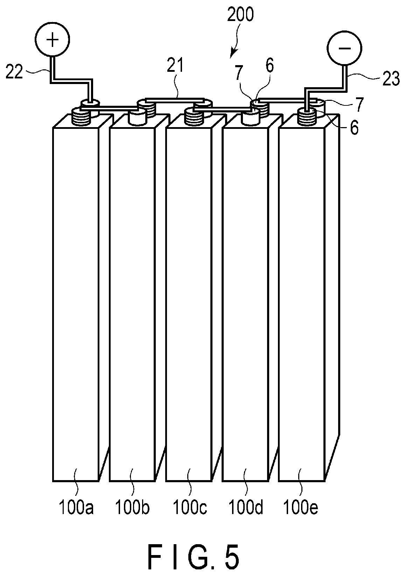

FIG. 5 is a perspective view schematically showing an example of the battery module. The battery module 200 shown in FIG. 5 includes five single-batteries 100a to 100e, four bus bars 21, a positive electrode-side lead 22, and a negative electrode-side lead 23. Each of the five single-batteries 100a to 100e is the secondary battery according to the second approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 5 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the third approach includes the secondary battery according to the second approach. Therefore, it is possible to provide a battery module in which gas generation is suppressed and output performance is high.

(Fourth approach)

According to a fourth approach, a battery pack is provided. The battery pack includes the battery module according to the third approach. The battery pack may include a single secondary battery according to the second approach, in place of the battery module according to the third approach.

The battery pack may further include a protective circuit. The protective circuit has a function to control charge and discharge of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

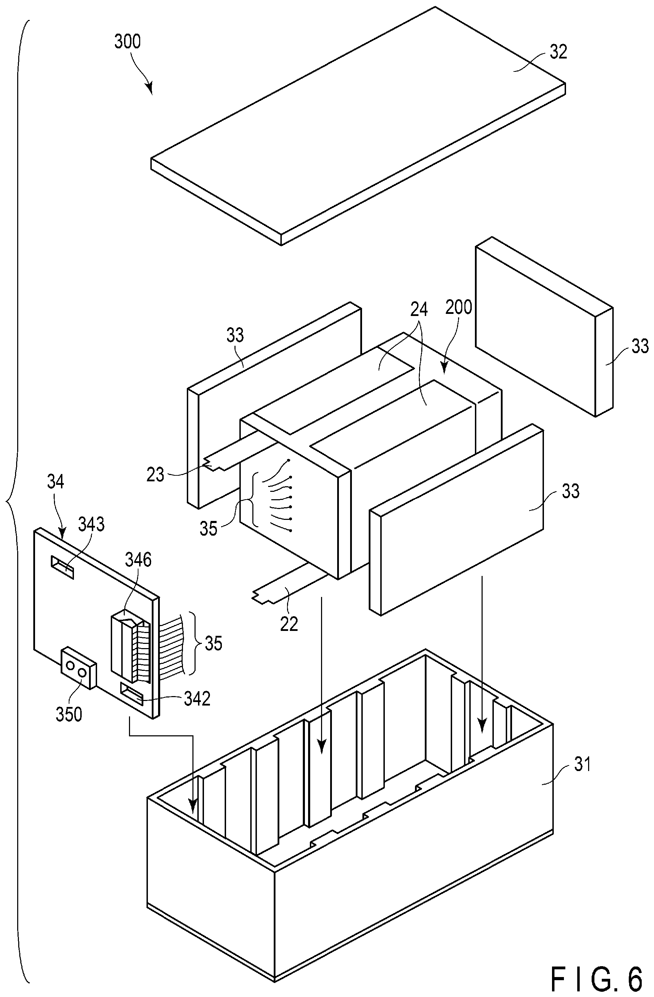

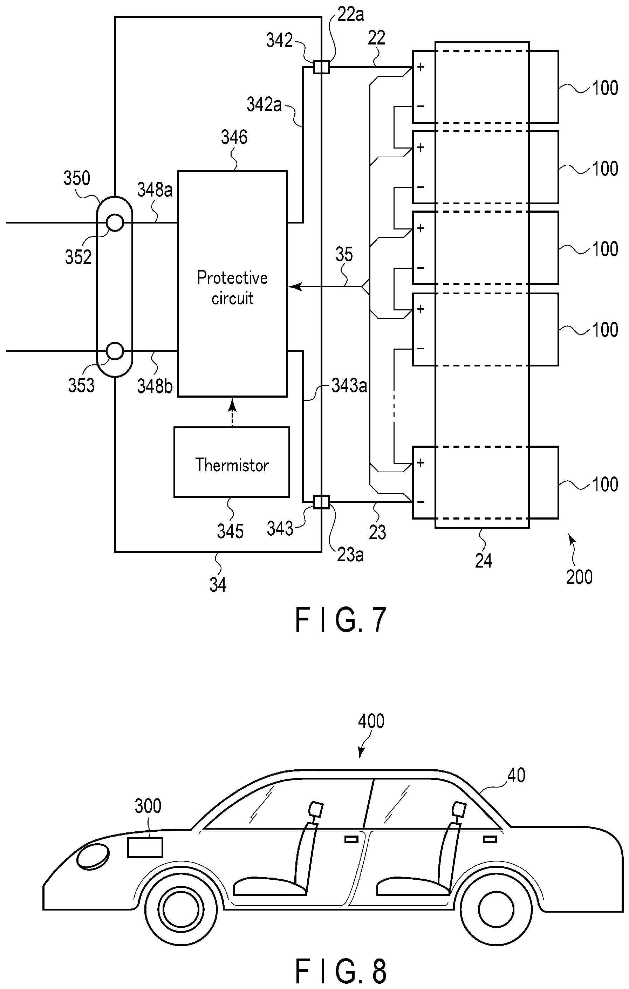

FIG. 6 is an exploded perspective view schematically showing an example of the battery pack. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

The housing container 31 shown in FIG. 6 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the second approach. The plural single-batteries 100 are electrically connected in series, as shown in FIG. 7. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, the protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over-charge or the like for each of the single batteries 100, the battery voltage may be detected, or a positive electrode potential or negative electrode potential may be detected. In the latter case, a lithium electrode to be used as a reference electrode may be inserted into each single-battery 100.

Note that, as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fourth approach is provided with the secondary battery according to the second approach or the battery module according to the third approach. Therefore, it is possible to provide a battery pack in which gas generation is suppressed and output performance is high.

(Fifth approach)

According to a fifth approach, a vehicle is provided. The battery pack according to the fourth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to fourwheeled hybrid electric automobiles, two-wheeled to fourwheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may be installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle according to the approach is explained below, with reference to the drawings.

FIG. 8 is a partially see-through diagram schematically showing an example of the vehicle.

A vehicle 400, shown in FIG. 8 includes a vehicle body 40 and a battery pack 300 according to the fourth approach. In the example shown in FIG. 8, the vehicle 400 is a fourwheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 8, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

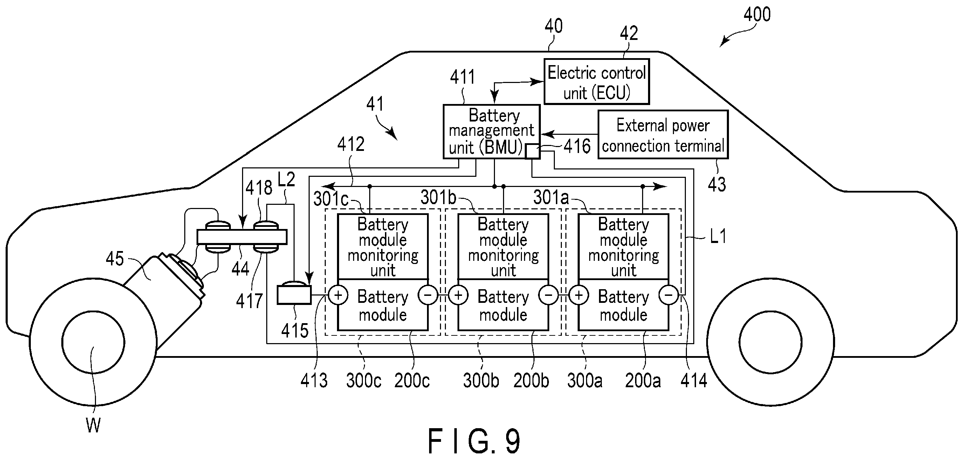

Next, with reference to FIG. 9, an aspect of operation of the vehicle according to the approach is explained.

FIG. 9 is a diagram schematically showing an example of a control system related to an electric system in the vehicle. A vehicle 400, shown in FIG. 9, is an electric automobile.

The vehicle 400, shown in FIG. 9, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charge and discharge via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at plural nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 9) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the fifth approach is installed with the battery pack according to the fourth approach. Since the battery pack is suppressed in gas generation and has high output performance, a high-performance vehicle can be provided.

Examples

The present invention will be described in more detail with reference to examples described below, but is not limited to the examples listed below, as long as it does not depart from the spirit of the invention.

(Example 1)

(Production of negative electrode)

First, $TiNb_2O_7$ as a niobium-containing oxide was synthesized by performing an annealing treatment after a spray drying method. The annealing treatment was performed at 1100°C for 6 hours. Thereafter, pulverization was performed with a dry ball mill at a ball diameter of 2 mm and a rotation speed of 200 rpm for 12 hours, and then a re-annealing treatment was performed under conditions of 600°C and 12 hours. The thus obtained $TiNb_2O_7$ particles were used as a negative electrode active material.

As a carbon-containing material, acetylene black having a particle size of 31 nm as a granular carbon-containing material was prepared. As a binder, a mixture obtained by mixing carboxymethyl cellulose and styrene butadiene rubber at a mass ratio of 1:1 was prepared.

The niobium-containing oxide, the acetylene black, and the binder were mixed at a mass ratio of 96:2:2 and dispersed in water as a solvent. A planetary mixer was used for premixing the electrode materials. Dispersion was performed using a bead mill under conditions of 2000 rpm and a flow rate of 40 mL/min. The negative electrode slurry thus produced was applied to a negative electrode current collector made of an aluminum foil and dried. Thus, a negative electrode was obtained.

(Production of positive electrode)

A slurry was prepared by adding 100 parts by mass of lithium nickel cobalt manganese composite oxide $LiNi_{0.8}Co_{0.1}Mn_{0.1}O_2$ (NCM811) as a positive electrode active material, 5 parts by mass of acetylene black as an electro-conductive agent, and 5 parts by mass of polyvinylidene fluoride (PVdF) as a binder were to N-methylpyrrolidone (NMP), and mixing them. This slurry was applied onto both surfaces of a current collector made of an aluminum foil having a thickness of 12 $\mu$m, and then dried and pressed to produce a positive electrode having an electrode density (excluding the current collector) of 3.2 g/cm$^3$.

(Preparation of electrolyte)

In an argon atmosphere, lithium hexafluorophosphate (LiPF$_6$) was dissolved in propylene carbonate (PC) at a concentration of 1.0 mol/L to prepare a liquid nonaqueous electrolyte (electrolytic solution).

(Assembly of battery)

The positive electrode produced as described above, a separator made of cellulose and having a thickness of 15 $\mu$m, the negative electrode produced as described above, and the separator were stacked in this order, and then wound in a spiral shape so that the negative electrode was located at the outermost periphery to produce an electrode group. This was heat-pressed at 90°C to produce a flat electrode group having a width of 58 mm and a thickness of 3.0 mm. The obtained electrode group was housed in a container member made of a laminate film having a thickness of 0.1 mm, which was formed of an aluminum foil having a thickness of 40 $\mu$m and polypropylene layers formed on both surfaces of the aluminum foil, and vacuum-dried at 120°C for 24 hours. After vacuum drying, an electrolyte was injected into the electrode group housed in the laminate film under an argon atmosphere. Then, the upper part of the laminate film was sealed under reduced pressure to obtain a secondary battery.

(Example 2)

A secondary battery was produced in the same manner as in Example 1 except that furnace black having a particle size of 45 nm as a granular carbon-containing material was used as the negative electrode carbon-containing material.

(Example 3)

A secondary battery was produced in the same manner as in Example 1 except that multilayered graphene having a thickness of 52 nm as a flat plate-shaped carbon-containing material was used as the negative electrode carbon-containing material.

(Example 4)

A secondary battery was produced in the same manner as in Example 1 except that SWCNT having a fiber diameter of 4 nm as a fibrous carbon-containing material was used as the negative electrode carbon-containing material.

(Example 5)

A secondary battery was produced in the same manner as in Example 1 except that MWCNT having a fiber diameter of 15 nm as a fibrous carbon-containing material was used as the negative electrode carbon-containing material.

(Example 6)

As the negative electrode carbon-containing material, SWCNT having a fiber diameter of 4 nm as a fibrous carbon-containing material and acetylene black having a particle shape (particle size) of 31 nm as a granular carbon-containing material were prepared. In the production of the negative electrode slurry, the niobium-containing oxide, the SWCNT, the acetylene black, and the binder were mixed at a mass ratio of 96:1.99:0.01:2. A secondary battery was produced in the same manner as in Example 1 except for the above.

(Example 7)

As the negative electrode carbon-containing material, SWCNT having a fiber diameter of 4 nm as a fibrous carbon-containing material and multilayered graphene having a thickness of 55 nm as a flat plate-shaped carbon-containing material were prepared. In the production of the negative electrode slurry, the niobium-containing oxide, the SWCNT, the multilayered graphene, and the binder were mixed at a mass ratio of 96:0.1:1.9:2. A secondary battery was produced in the same manner as in Example 1 except for the above.

(Example 8)

As the negative electrode carbon-containing material, SWCNT having a fiber diameter of 4 nm as a fibrous carbon-containing material and acetylene black having a particle shape of 49 nm as a granular carbon-containing material were prepared. In the production of the negative electrode slurry, the niobium-containing oxide, the SWCNT, the acetylene black, and the binder were mixed at a mass ratio of 96:1.99:0.01:2. A secondary battery was produced in the same manner as in Example 1 except for the above.

(Example 9)

As the negative electrode carbon-containing material, SWCNT having a fiber diameter of 4 nm as a fibrous carbon-containing material and graphite having a thickness of 582 nm as a flat plate-shaped carbon-containing material were prepared. As the graphite, purified natural graphite was used. In the production of the negative electrode slurry, the niobium-containing oxide, the SWCNT, the graphite, and the binder were mixed at a mass ratio of 96:0.1:1.9:2. A secondary battery was produced in the same manner as in Example 1 except for the above.

(Example 10)

The niobium-containing oxide was changed to $Nb_2O_5$, $Nb_2O_5$ was synthesized by performing an annealing treatment after the spray drying method. The annealing treatment was performed at 1100°C for 6 hours. Thereafter, pulverization was performed with a dry ball mill at a ball diameter of 2 mm and a rotation speed of 200 rpm for 12 hours, and then a re-annealing treatment was performed under conditions of 600°C and 12 hours. The thus obtained $Nb_2O_5$ particles were used as a negative electrode active material. A secondary battery was produced in the same manner as in Example 6 except for the above.

(Example 11)

The niobium-containing oxide was changed to $Nb_{16}W_5O_{55}$. $Nb_{16}W_5O_{55}$ was synthesized by performing an annealing treatment after the spray drying method. The annealing treatment was performed at 1100°C for 6 hours. Thereafter, pulverization was performed with a dry ball mill at a ball diameter of 2 mm and a rotation speed of 200 rpm for 12 hours, and then a re-annealing treatment was performed under conditions of 600°C and 12 hours. The thus obtained $Nb_{16}W_5O_{55}$ particles were used as a negative electrode active material. A secondary battery was produced in the same manner as in Example 6 except for the above.

(Example 12)

The niobium-containing oxide was changed to $FeNb_{11}O_{29}$. $FeNb_{11}O_{29}$ was synthesized by performing an annealing treatment after the spray drying method. The annealing treatment was performed at 1100°C for 6 hours. Thereafter, pulverization was performed with a dry ball mill at a ball diameter of 2 mm and a rotation speed of 200 rpm for 12 hours, and then a re-annealing treatment was performed under conditions of 600°C and 12 hours. The thus obtained $FeNb_{11}O_{29}$ particles were used as a negative electrode active material. A secondary battery was produced in the same manner as in Example 6 except for the above.

(Comparative Example 1)

In the synthesis of $TiNb_2O_7$ as the niobium-containing oxide, the conditions for pulverization using the dry ball mill were changed to conditions of a ball diameter of 10 mm, a rotation speed of 300 rpm, and 48 hours. In addition, the re-annealing treatment was not performed. A secondary battery was produced in the same manner as in Example 6 except for the above.

(Comparative Example 2)

A secondary battery was produced in the same manner as in Example 6 except that the conditions of the bead mill used for dispersion were changed to 3600 rpm and a flow rate of 5 mL/min in the production of the negative electrode slurry.

(Comparative Example 3)

As the negative electrode carbon-containing material, MWCNT having a fiber diameter of 17 nm as a fibrous carbon-containing material and furnace black having a particle size of 46 nm as a granular carbon-containing material were prepared. In the production of the negative electrode slurry, the niobium-containing oxide, the MWCNT, the furnace black, and the binder were mixed at a mass ratio of 92:2:4:2. A secondary battery was produced in the same manner as in Example 6 except for the above.

(Measurement)

For the negative electrode included in the secondary battery of each of Examples and Comparative Examples, the hydroxyl group content of the niobium-containing oxide, the functional group content of the carbon-containing material, and the sizes of the carbon-containing materials (average fiber diameter of the fibrous carbon, average thickness of the flat plate-shaped carbon-containing material, and average particle size of the granular carbon-containing material) were measured by the methods described above.

(Evaluation)

For the secondary battery of each of Examples and Comparative Examples, the amount of gas generated, the 5 C/0.2 C discharge capacity retention ratio, and the cycle capacity retention ratio were tested as follows.

(Amount of gas generated)

The secondary batteries of Examples and Comparative Examples were held in a state of charge (SOC) of 100% at an environmental temperature of 80°C for 10 days. Thereafter, the amount of gas generated (cc) in the secondary battery was measured. The measured amount of gas generated was divided by the battery capacity (Ah) to calculate the amount of gas generated (cc/Ah) based on the battery capacity.

(5 C/0.2 C discharge capacity retention ratio)

The secondary batteries of Examples and Comparative Examples were charged and discharged in a potential range of 1.0 V to 3.0 V. In addition, in order to investigate the discharge rate performance, after confirmation of the 0.2 C discharge capacity, the battery was charged again with the charge current value set to 0.2 C to confirm 5 C rapid discharge capacity at room temperature. Then, the discharge capacity retention ratio (%) was determined by dividing the 5 C discharge capacity by the 0.2 C discharge capacity and multiplying the obtained value by 100. The 5 C/0.2 C discharge capacity retention ratio (%) serves as an index for evaluating the output performance.

(Cycle capacity retention ratio)

The secondary batteries of Examples and Comparative Examples were subjected to a life test of repeating 1C charge and discharge in a potential range of 1.0 V to 3.0 V in a 25°C environment. Under these conditions, charge and discharge were repeated 1000 cycles (a charge and a discharge being taken as one cycle), and the discharge capacity retention ratio after 1000 cycles was investigated. In order to confirm the discharge capacity retention ratio after 1000 cycles, the charge and discharge were performed again at 0.2 C (hourly discharge rate), and a cycle capacity retention ratio (%) in the case where a first cycle discharge capacity is 100% was calculated by dividing the discharge capacity after 1000 cycles by the first cycle discharge capacity and multiplying the obtained value by 100. The discharge capacity retention ratio after 1000 cycles serves as an index for evaluating the cycle life performance.

The materials, measurement results, and test results of each of Examples and Comparative Examples described above are summarized in tables. The type of the negative electrode active material, the hydroxyl group content of the niobium-containing oxide, the type of the carbon-containing material, and the functional group content of the carbon-containing material are shown in Table 1. The sizes of the carbon-containing materials (average fiber diameter of the fibrous carbon-containing material, average thickness of the flat plate-shaped carbon-containing material, and average particle size of the granular carbon-containing material), amount of gas generated, 5 C/0.2 C discharge capacity retention ratio, and cycle capacity retention ratio are shown in Table 2. Among the sizes of the carbon-containing materials, the size of the carbon-containing material not included in the secondary battery to be measured is indicated by "-".

Table 1

| | Type of negative electrod e active material | Hydroxyl group content (mmol/g) of niobium-containi ng oxide | Type of carbon-containing material | Function al group content (mmol/g) of carbon-containi ng material |
|---|---|---|---|---|
| Example 1 | $TiNb_2O_7$ | 0.04 | Acetylene black | 1.90 |
| Example 2 | $TiNb_2O_7$ | 0.04 | Furnace black | 3.80 |
| Example 3 | $TiNb_2O_7$ | 0.04 | Multilayered graphene | 0.08 |
| Example 4 | $TiNb_2O_7$ | 0.04 | SWCNT | 0.26 |
| Example 5 | $TiNb_2O_7$ | 0.04 | MWCNT | 2.98 |
| Example 6 | $TiNb_2O_7$ | 0.04 | SWCNT, acetylene black | 1.20 |
| Example 7 | $TiNb_2O_7$ | 0.04 | SWCNT, multilayered graphene | 0.22 |
| Example 8 | $TiNb_2O_7$ | 0.04 | SWCNT, acetylene black | 1.05 |
| Example 9 | $TiNb_2O_7$ | 0.04 | SWCNT, purified natural graphite | 0.56 |
| Example 10 | $Nb_2O_5$ | 0.065 | SWCNT, acetylene black | 1.20 |
| Example 11 | $Nb_{16}W_5O_{55}$ | 0.12 | SWCNT, acetylene black | 1.22 |
| Example 12 | $FeNb_{11}O_{29}$ | 0.22 | SWCNT, acetylene black | 1.17 |
| Comparative Example 1 | $TiNb_2O_7$ | 0.32 | SWCNT, acetylene black | 1.24 |
| Comparative Example 2 | $TiNb_2O_7$ | 0.04 | SWCNT, acetylene black | 5.88 |
| Comparative Example 3 | $TiNb_2O_7$ | 0.04 | MWCNT, furnace black | 8.20 |

Table 2

| | Average fiber diameter (nm) of fibrous carbon-containi ng material | Average thicknes s of flat plate-shaped carbon-containi ng material (nm) | Average particle size of granular carbon-containi ng material (nm) | Amount of gas generat ed (cc/Ah) | 5 C/0.2 C dischar ge capacit Y retenti on ratio (%) | Cycle capacit y retenti on ratio (%) |
|---|---|---|---|---|---|---|
| Example 1 | - | - | 31.0 | 0.18 | 94 | 91 |
| Example 2 | - | - | 45.0 | 0.44 | 93 | 88 |
| Example 3 | - | 52 | - | 0.05 | 88 | 89 |
| Example 4 | 4 | - | - | 0.09 | 89 | 90 |
| Example 5 | 15 | - | - | 0.32 | 87 | 89 |
| Example 6 | 4 | - | 31.2 | 0.15 | 93 | 96 |
| Example 7 | 4 | 55 | - | 0.08 | 91 | 94 |
| Example 8 | 4 | - | 49.2 | 0.14 | 92 | 88 |
| Example 9 | 4 | 582 | - | 0.12 | 87 | 87 |
| Example 10 | 4 | - | 30.9 | 0.17 | 93 | 94 |

(continued)

|  | Average fiber diameter (nm) of fibrous carbon-containing material | Average thickness of flat plate-shaped carbon-containing material (nm) | Average particle size of granular carbon-containing material (nm) | Amount of gas generated (cc/Ah) | 5 C/0.2 C discharge capacity retention ratio (%) | Cycle capacity retention ratio (%) |
|---|---|---|---|---|---|---|
| Example 11 | 4 | - | 30.0 | 0.28 | 94 | 91 |
| Example 12 | 4 | - | 30.8 | 0.52 | 90 | 94 |
| Comparative Example 1 | 4 | - | 30.6 | 2.10 | 91 | 94 |
| Comparative Example 2 | 4 | - | 30.6 | 0.98 | 71 | 72 |
| Comparative Example 3 | 17 | - | 45.8 | 1. 50 | 74 | 78 |

In all of Examples 1 to 12, the hydroxyl group content of the niobium-containing oxide contained in the negative electrode was 0.25 mmol/g or less, and the functional group content of the carbon-containing material was 5 mmol/g or less. In all of these Examples, the amount of gas generated was small, and the 5 C/0.2 C discharge capacity retention ratio was high. That is, it has become clear that gas generation is suppressed and that output performance is high. This is considered to be because gas generation can be suppressed due to a low hydroxyl group content of the niobium-containing oxide contained in the electrode, and because the niobium-containing oxide with a low hydroxyl group content and the carbon-containing material with a low functional group content can form a good electro-conductive path.

In addition, all of the secondary batteries of Examples had high cycle capacity retention ratios. This is considered to be because, due to a low hydroxyl group content of the niobium-containing oxide contained in the electrode and a low functional group content of the carbon-containing material, the niobium-containing oxide and the carbon-containing material could be hardly peeled off even after the charge and discharge cycle, so that the cycle life performance could be improved.

From Examples 1 to 9, it has become clear that a secondary battery having a small amount of gas generated, a high 5 C/0.2 C discharge capacity retention ratio, and a high cycle capacity retention ratio can be obtained even when the type of the carbon-containing material is variously changed or carbon-containing materials having different shapes are combined.

Comparing Examples 1 and 2 including the granular carbon-containing material, Example 1 including acetylene black as crystalline carbon black was more excellent in amount of gas generated, 5 C/0.2 C discharge capacity retention ratio, and cycle capacity retention ratio.

Comparing Examples 4 and 5 including the fibrous carbon-containing material, Example 4 including the fibrous carbon-containing material having an average fiber diameter of 10 nm or less was more excellent in amount of gas generated, 5 C/0.2 C discharge capacity retention ratio, and cycle capacity retention ratio.

Comparing Examples 6 and 8 including the fibrous carbon-containing material and the granular carbon-containing material, Example 6 in which the fibrous carbon-containing material and the granular carbon-containing material satisfied db < 10 da, where da was an average fiber diameter of the fibrous carbon-containing material and db was an average particle size of the granular carbon-containing material, was more excellent in amount of gas generated, 5 C/0.2 C discharge capacity retention ratio, and cycle capacity retention ratio. This is considered to be because the average particle size of the granular carbon-containing material was not too large with respect to the average fiber diameter of the fibrous carbon-containing material, so that the fibrous carbon-containing material could be suppressed from coating the granular carbon-containing material, and as a result, the dispersibility of the fibrous carbon-containing material in the electrode was good.

Comparing Examples 7 and 9 including the fibrous carbon-containing material and the flat plate-shaped carbon-containing material, Example 7 in which the fibrous carbon-containing material and the flat plate-shaped carbon-containing material satisfied ta < 20 da, where da was an average fiber diameter of the fibrous carbon-containing material and ta was an average thickness of the flat plate-shaped carbon-containing material, was more excellent in amount of gas generated, 5 C/0.2 C discharge capacity retention ratio, and cycle capacity retention ratio. This is considered to be because the average thickness of the flat plate-shaped carbon-containing material was not too large with respect to the average fiber diameter of the fibrous carbon-containing material, so that the fibrous carbon-containing material could be suppressed from coating the flat plate-shaped carbon-containing material, and as a result, the dispersibility of the fibrous carbon-containing material in the electrode was good.

From Examples 1 and 10 to 12, it has become clear that a secondary battery having a small amount of gas generated, a high 5 C/0.2 C discharge capacity retention ratio, and a high cycle capacity retention ratio can be obtained even when the type of the niobium-containing oxide contained in the negative electrode active material is variously changed.

Comparative Example 1 is similar to Example 6 in that the spray drying method as the liquid phase method was performed in the synthesis of the niobium-containing oxide, but, as conditions for pulverization using the dry ball mill, the shearing force was higher than that in Example 6, and further the pulverization was performed for a long time of 48 hours. Thus, the shearing force was excessively high. Therefore, it is considered that the crystallinity of the surface of the niobium-containing oxide particles was reduced, so that the hydroxyl group content of the niobium-containing oxide was increased, resulting in a large amount of gas generated.

Comparative Example 2 is a secondary battery produced using the same materials as in Example 6, but the functional group content of the carbon-containing material was high. This is considered to be because, in the production of the negative electrode slurry, the shearing force was too high because of too high a peripheral speed of the bead mill used for dispersion and too low a flow rate, so that the crystallinity of the carbon-containing material was reduced, or the solvent and the carbon-containing material reacted with each other, due to which a functional group was added to the carbon-containing material. In such Comparative Example 2, all of the amount of gas generated, the 5 C/0.2 C discharge capacity retention ratio, and the cycle capacity retention ratio were inferior to those in Examples.

In Comparative Example 3, all of the amount of gas generated, the 5 C/0.2 C discharge capacity retention ratio, and the cycle capacity retention ratio were inferior to those in Examples. The negative electrode included in the secondary battery of Comparative Example 3 contains MWCNT as the fibrous carbon-containing material and furnace black as the granular carbon. MWCNT tends to have a higher functional group content than, for example, SWCNT which is the same fibrous carbon. Furnace black tends to have a higher functional group content than, for example, acetylene black which is the same granular carbon. It is considered that, as a result of using the carbon-containing material having a high functional group content as described above, the functional group content as the whole carbon-containing material exceeded 5 mmol/g, and thus that the amount of gas generated increased, and the 5 C/0.2 C discharge capacity retention ratio and the cycle capacity retention ratio decreased.

According to at least one of the approach or examples described above, an electrode is provided. The electrode contains a niobium-containing oxide and a carbon-containing material. The hydroxyl group content of the niobium-containing oxide is 0.25 mmol/g or less. The functional group content of the carbon-containing material is 5 mmol/g or less. The electrode is suppressed in gas generation and has high output performance.

Hereinafter, the inventions according to the approach will be additionally described.

1. An electrode comprising: a niobium-containing oxide; and a carbon-containing material, wherein

a hydroxyl group content of the niobium-containing oxide is 0.25 mmol/g or less, and
a functional group content of the carbon-containing material is 5 mmol/g or less.

2. The electrode according to clause 1, wherein the carbon-containing material includes at least one selected from the group consisting of a fibrous carbon-containing material, a granular carbon-containing material, and a flat plate-shaped carbon-containing material.

3. The electrode according to clause 1 or 2, wherein the carbon-containing material includes the fibrous carbon-containing material having an average fiber diameter of 10 nm or less.

4. The electrode according to any one of clauses 1 to 3, wherein the carbon-containing material includes crystalline carbon black.

5. The electrode according to any one of clauses 2 to 4, wherein the carbon-containing material includes the fibrous carbon-containing material and the granular carbon-containing material, and satisfies Formula A:

$$\text{Formula A: } db < 10\ da,$$

, wherein da is an average fiber diameter of the fibrous carbon-containing material, and db is an average particle size of the granular carbon-containing material.

6. The electrode according to any one of clauses 2 to 5, wherein the carbon-containing material includes the fibrous carbon-containing material and the flat plate-shaped carbon-containing material, and satisfies Formula B:

$$\text{Formula B: } ta < 20\ da,$$

wherein da is an average fiber diameter of the fibrous carbon-containing material, and ta is an average thickness of the flat plate-shaped carbon-containing material.

7. The electrode according to clause 5, wherein the carbon-containing material further includes the flat plate-shaped carbon-containing material, and satisfies Formula B:

$$\text{Formula B: } ta < 20\ da,$$

wherein da is the average fiber diameter, and ta is an average thickness of the flat plate-shaped carbon-containing material.

8. The electrode according to any one of clauses 2 to 7, wherein the granular carbon-containing material includes crystalline carbon black.

9. A secondary battery (100) comprising: a positive electrode (5); a negative electrode (3); and an electrolyte, wherein the negative electrode (3) is the electrode according to any one of clauses 1 to 8.

10. A battery pack (300) comprising the secondary battery (100) according to clause 9.

11. The battery pack (300) according to clause 10, further comprising: an external power distribution terminal (350); and a protective circuit (346).

12. The battery pack (300) according to clause 10 or 11, comprising plural of the secondary battery (100), the secondary batteries being electrically connected in series, in parallel, or in a combination of in-series connection and in-parallel connection.

13. A vehicle (400) comprising the battery pack (300) according to any one of clauses 10 to 12.

14. The vehicle (400) according to clause 13, wherein the vehicle comprises a mechanism configured to convert kinetic energy of the vehicle into regenerative energy.

While certain embodiments have been described, these embodiments have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

**Claims**

1. An electrode comprising: a niobium-containing oxide; and a carbon-containing material, wherein

    a hydroxyl group content of the niobium-containing oxide is 0.25 mmol/g or less, and
    a functional group content of the carbon-containing material is 5 mmol/g or less.

2. The electrode according to claim 1, wherein the carbon-containing material includes at least one selected from the group consisting of a fibrous carbon-containing material, a granular carbon-containing material, and a flat plate-shaped carbon-containing material.

3. The electrode according to claim 2, wherein the carbon-containing material includes the fibrous carbon-containing material having an average fiber diameter of 10 nm or less.

4. The electrode according to claim 1, wherein the carbon-containing material includes crystalline carbon black.

5. The electrode according to claim 2 or 3, wherein the carbon-containing material includes the fibrous carbon-containing material and the granular carbon-containing material, and satisfies Formula A:

$$\text{Formula A: } db < 10\ da,$$

wherein da is an average fiber diameter of the fibrous carbon-containing material, and db is an average particle size of the granular carbon-containing material.

6. The electrode according to claim 2 or 3, wherein the carbon-containing material includes the fibrous carbon-containing material and the flat plate-shaped carbon-containing material, and satisfies Formula B:

$$\texttt{Formula B: ta < 20 da,}$$

wherein da is an average fiber diameter of the fibrous carbon-containing material, and ta is an average thickness of the flat plate-shaped carbon-containing material.

7. The electrode according to claim 5, wherein the carbon-containing material further includes the flat plate-shaped carbon-containing material, and satisfies Formula B:

$$\texttt{Formula B: ta < 20 da,}$$

wherein da is the average fiber diameter, and ta is an average thickness of the flat plate-shaped carbon-containing material.

8. The electrode according to claim 5 or 7, wherein the granular carbon-containing material includes crystalline carbon black.

9. A secondary battery (100) comprising: a positive electrode (5); a negative electrode (3); and an electrolyte, wherein the negative electrode (3) is the electrode according to any one of claims 1 to 8.

10. A battery pack (300) comprising the secondary battery (100) according to claim 9.

11. The battery pack (300) according to claim 10, further comprising: an external power distribution terminal (350); and a protective circuit (346).

12. The battery pack (300) according to claim 10 or 11, comprising plural of the secondary battery (100), the secondary batteries being electrically connected in series, in parallel, or in a combination of in-series connection and in-parallel connection.

13. A vehicle (400) comprising the battery pack (300) according to any one of claims 10 to 12.

14. The vehicle (400) according to claim 13, wherein the vehicle comprises a mechanism configured to convert kinetic energy of the vehicle into regenerative energy.

100

1    2    A

6    7

# F I G. 1

A

2
3a ⎤
3b ⎦ 3

4

5b ⎤
5a ⎬ 5
5b ⎦

4

4

3b ⎤
3a ⎬ 3
3b ⎦

4

5b ⎤
5a ⎬ 5
5b ⎦

4

# F I G. 2

F I G. 3

F I G. 4

F I G. 5

F I G. 6

F I G. 7

F I G. 8

F I G. 9

Europäisches
Patentamt
European
Patent Office
Office européen
des brevets

## EUROPEAN SEARCH REPORT

**Application Number**

EP 25 19 0593

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 4 432 398 A1 (TOSHIBA KK [JP])<br>18 September 2024 (2024-09-18)<br>* paragraphs [0024], [0081] - [0086], [0148] - [0211], [0251] - [0252]; example 1 * | 1,2,4,<br>9-14<br>3,5-8 | INV.<br>H01M4/36<br>H01M4/485<br>H01M4/62<br>H01M4/66 |
| X | US 11 322 742 B2 (TOSHIBA KK [JP])<br>3 May 2022 (2022-05-03)<br>* example 3 * | 1-3 | |
| X | AGHAMOHAMMADI HAMED ET AL: "A review study on titanium niobium oxide-based composite anodes for Li-ion batteries: Synthesis, structure, and performance",<br>CERAMICS INTERNATIONAL,<br>vol. 47, no. 19, 7 June 2021 (2021-06-07), pages 26598-26619, XP093290672,<br>NL<br>ISSN: 0272-8842, DOI:<br>10.1016/j.ceramint.2021.06.127<br>* table 1 * | 1,2 | |

TECHNICAL FIELDS
SEARCHED (IPC)

H01M

The present search report has been drawn up for all claims

| Place of search | Date of completion of the search | Examiner |
|---|---|---|
| Munich | 20 January 2026 | Lavorenti, Marek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 0593

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2026

| Patent document cited in search report | | Publication date | Patent family member(s) | | Publication date |
|---|---|---|---|---|---|
| EP 4432398 | A1 | 18-09-2024 | EP | 4432398 A1 | 18-09-2024 |
| | | | JP | 2024132502 A | 01-10-2024 |
| | | | TW | 202439655 A | 01-10-2024 |
| | | | US | 2024313222 A1 | 19-09-2024 |
| US 11322742 | B2 | 03-05-2022 | CN | 111697209 A | 22-09-2020 |
| | | | EP | 3709400 A1 | 16-09-2020 |
| | | | JP | 7258607 B2 | 17-04-2023 |
| | | | JP | 2020149829 A | 17-09-2020 |
| | | | US | 2020295361 A1 | 17-09-2020 |

EPO FORM P0459

For more details about this annex : see Official Journal of the European Patent Office, No. 12/82